# EUROPEAN PATENT SPECIFICATION

(11) **EP 2 584 257 B1**
(45) Date of publication and mention of the grant of the patent: **30.11.2016**
(21) Application number: 11795429.7
(22) Date of filing: 17.01.2011
(51) Int. Cl.: F23C 9/08, F23C 99/00, F23L 7/00

(54) **COMBUSTION SYSTEM**
VERBRENNUNGSSYSTEM
SYSTÈME DE COMBUSTION

(30) Priority: 16.06.2010 JP 2010137211
(43) Date of publication of application: 24.04.2013
(73) Proprietor: Mitsubishi Hitachi Power Systems, Ltd., Yokohama 220-8401 (JP)
(72) Inventor: MATSUDA, Masahiko, Tokyo 108-8215 (JP); SUGANUMA, Hiroshi, Tokyo 108-8215 (JP); ARUGA, Takeshi, Tokyo 108-8215 (JP); FUJIMURA, Koutaro, Tokyo 108-8215 (JP); DAIMARU, Takuichiro, Tokyo 108-8215 (JP)
(74) Representative: Henkel, Breuer & Partner
(86) International application number: PCT/JP2011/050622
(87) International publication number: WO 2011/158521

(56) References cited:
- JP-A- 2 306 004
- JP-A- 9 089 211
- JP-A- 59 195 013
- JP-A- 2010 054 144
- JP-A- 2010 107 129
- JP-A- 2010 112 679
- JP-U- S5 942 452
- JP-U- S6 323 511
- JP-U- 63 023 511
- US-A1- 2010 107 940

## Description

### {Technical Field}

The present invention relates to a combustion system, and more particularly relates to removal of nitrogen oxide in exhaust gas.

### {Background Art}

Coal is generally used as fuel in thermal power plants and the like since the resource volume of coal is abundant. However, coal is high in carbon contents in fuel compared with oil and gas. When coal is combusted by an air combustion boiler system, the emission amount of carbon dioxide is increased.

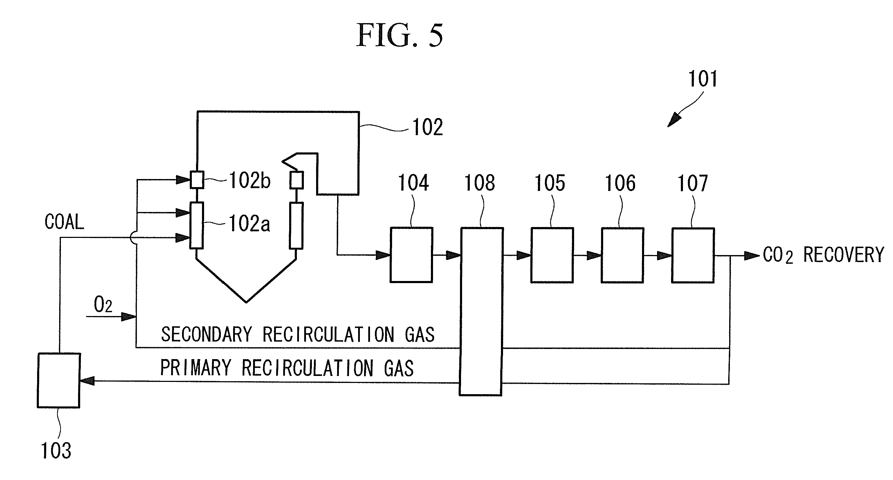

In order to increase concentrations of carbon dioxide for easy recovery, an oxygen combustion boiler system 101 as shown in Fig. 5 is used. The oxygen combustion boiler system 101 includes a coal pulverizer 103 for pulverizing coal, an oxygen combustion boiler 102 for combusting the coal pulverized by the coal pulverizer 103 and discharging exhaust gas, a denitration device 104 for removing nitrogen oxide in the exhaust gas discharged from the oxygen combustion boiler 102, a dust removal device 105 for removing dust and the like in the exhaust gas, a desulfurization device 106 for removing sulfur oxide in the exhaust gas, and a gas cooler 107 for cooling the exhaust gas to remove moisture in the exhaust gas.

Carrier gas is introduced into the coal pulverizer 103 for drying the pulverized coal and conveying the pulverized coal from the coal pulverizer 103 to the oxygen combustion boiler 102. As the carrier gas, exhaust gas (hereinafter referred to as "primary recirculation gas") discharged from the desulfurization device 106 and traveling through the gas cooler 107 is used. The primary recirculation gas is heated by an air heater 108 provided between the denitration device 104 and the dust removal device 105 for drying the coal. The air heater 108 performs heat exchange between high-temperature exhaust gas discharged from the denitration device 104 and low-temperature exhaust gas which has passed the gas cooler 107, and thereby heats the primary recirculation gas introduced to the coal pulverizer 103.

A boiler capable of conducting denitration inside a furnace (not shown) of the oxygen combustion boiler 102 by two-stage combustion (e.g., JP 3068888B) is used as the oxygen combustion boiler 102. The oxygen combustion boiler 102 includes a burner unit 102a for supplying oxygen introduced from a combustion oxygen supply system, later-described secondary recirculation gas, and coal as fuel into the oxygen combustion boiler 102. The oxygen combustion boiler 102 also includes an additional air port (hereinafter referred to as "AA port") 102b provided on the downstream side of the burner unit 102a for supplying oxygen introduced from the combustion oxygen supply system and later-described secondary recirculation gas into the oxygen combustion boiler 102.

The oxygen supplied into the oxygen combustion boiler 102 through the burner unit 102a and the AA port 102b contains part of the exhaust gas (hereinafter referred to as "secondary recirculation gas") which has been introduced from the downstream of the gas cooler 107 and mixed therein as dilution gas. The secondary recirculation gas is heated by the air heater 108 and is mixed into the oxygen which is introduced to the burner unit 102a and the AA port 102b.

The oxygen supplied to the burner unit 102a is adjusted so that the amount of oxygen introduced from the combustion oxygen supply system is not larger than 1.0 times the theoretical combustion oxygen amount of the coal supplied from the coal pulverizer 103. A remaining amount of the oxygen introduced from the combustion oxygen supply system is supplied to the AA port 102b. Accordingly, a zone between the burner unit 102a and the AA port 102b in the oxygen combustion boiler 102 is in an oxygen-poor state.

Since oxygen is poor in between the burner unit 102a and the AA port 102b, the zone between the burner unit 102a and the AA port 102b is made to have a reducing atmosphere. The fuel charged into the oxygen combustion boiler 102 through the burner unit 102a combusts and generates exhaust gas. Nitrogen oxide (NOx) contained in the generated exhaust gas is partially reduced when passing the reducing atmosphere present between the burner unit 102a and the AA port 102b. This makes it possible to decrease nitrogen oxide within the oxygen combustion boiler 102.

JP H6-94212A and JP S59-195013A disclose oxygen combustion boilers for receiving part of exhaust gas introduced as secondary recirculation gas which has passed a denitration device, an air heater, a dust removal device, and a desulfurization device.

JP 2010054144A discloses a combustion system with a boiler and a smoke removal device which has a heat exchanger, a dust collector, a desulfurization unit and a water removal unit. This document teaches to extract and recirculate a part of the dry exhaust gas dehumidified by the water removal unit and to introduce it to the reduction atmosphere region in the boiler to suppress the generation of an OH radical in the region of reducing atmosphere by removing the water included in the exhaust gas in order to suppress the generation of NOX.

US 2010/107940A1 discloses an oxyfuel boiler system with a smoke removal device including a NOₓ removing apparatus, a moisture removing cooler and a dry dust removing apparatus. The system recirculates part of the exhaust gas downstream of the moisture removing cooler or downstream of the dry dust removing apparatus to a combustion oxygen supply port and/or a burner unit.

US 2010/107940 A1 discloses a combustion system according to the preamble of claim 1.

### {Summary of Invention}

### {Technical Problem}

However, in the oxygen combustion boiler of the invention disclosed in JP S59-195013A as well as in the oxygen combustion boiler system 101 shown in Fig. 5, the exhaust having a high nitrogen oxide concentration discharged from the oxygen combustion boiler 102 was recirculated as secondary recirculation gas and was recharged into the oxygen combustion boiler 102. As a consequence, the denitration device 104 provided on the downstream side of the oxygen combustion boiler 102 had a heavy treatment burden.

Moreover, since the concentration of nitrogen oxide treated by the denitration device 104 was high, the consumption of ammonia sprayed to the exhaust gas passing the denitration device 104 increased.

In view of the above-stated problems, an object of the present invention is to provide a combustion system capable of decreasing nitrogen oxide discharged from exhaust gas.

### {Solution to Problem}

A combustion system of the present invention employs the features of claim 1 to solve the foregoing problems.

A combustion system according to the present invention includes: a combustion furnace having a burner unit for supplying fuel and combustion oxygen to an inside of the furnace, a reduction zone formed on a downstream side of the burner unit for combusting the fuel, and a combustion oxygen supply port for supplying combustion oxygen so that unburned fuel which has passed the reduction zone completely combusts; and a smoke removal device for removing smoke in the exhaust gas discharged from the combustion furnace, wherein the smoke removal device includes a denitration unit for removing nitrogen oxide from the exhaust gas, and wherein part of exhaust gas diverging from between the combustion furnace and the denitration unit of the smoke removal device is introduced to the burner unit, while part of exhaust gas diverging from a downstream side of the denitration unit of the smoke removal device is introduced to the combustion oxygen supply port.

In the combustion system according to the present invention, part of exhaust gas diverging from between the combustion furnace and the smoke removal device is resupplied to the inside of the combustion furnace through the burner unit. A zone under reducing atmosphere (reduction zone) is formed between the burner unit of the combustion furnace and the combustion oxygen supply port. Consequently, the exhaust gas diverging from between the combustion furnace and the smoke removal device can be reduced in the zone under reducing atmosphere formed in the combustion furnace and then be discharged. This makes it possible to decrease the flow rate of the exhaust gas introduced from the combustion furnace to the smoke removal device and to decrease the amount of smoke. Therefore, the capacity of the smoke removal device can be reduced.

Moreover, part of exhaust gas diverging from the downstream side of the denitration unit of the smoke removal device is the exhaust gas having the concentration of nitrogen oxide, which is smoke, decreased by the smoke removal device. The exhaust gas having a decreased nitrogen oxide concentration is introduced to the combustion oxygen supply port and is used for promoting complete combustion of the unburned fuel contained in the exhaust gas which has partially been reduced by passing the reducing atmosphere inside the combustion furnace. Therefore, the exhaust gas can be discharged out of the combustion furnace while the concentration of nitrogen oxide contained therein is maintained low. The exhaust gas having a decreased nitrogen oxide concentration is recirculated to the combustion furnace and the smoke removal device, so that increase in the concentration of nitrogen oxide in an outlet of the combustion furnace can be suppressed.

Preferably, in the combustion system according to the present invention, the smoke removal device includes: the denitration unit for removing nitrogen oxide in the exhaust gas discharged from the combustion furnace; a heat exchange unit for conducting heat exchange between exhaust gas which has passed the denitration unit and exhaust gas which is introduced to the combustion oxygen supply port; a dust removal unit for removing dust in exhaust gas which has passed the heat exchange unit; a desulfurization unit for removing sulfur oxide in exhaust gas which has passed the dust removal unit; and a cooling unit for cooling exhaust gas which has passed the desulfurization unit. Preferably, part of exhaust gas diverging from between the desulfurization unit and the cooling unit is introduced to the combustion oxygen supply port.

In the combustion system according to this preferred embodiment of the present invention, part of the exhaust gas diverging from between the desulfurization unit and the cooling unit is introduced to the combustion oxygen supply port of the combustion furnace. This makes it possible to decrease the flow rate of nitrogen oxide in the exhaust gas introduced to the denitration unit as well as to decrease the flow rate of the exhaust gas introduced to the cooling unit. Therefore, it becomes possible to downsize the denitration unit and to reduce the capacity of the cooling unit.

Preferably, in the combustion system according to the present invention, part of exhaust gas diverging from between the dust removal unit and the desulfurization unit is introduced to the combustion oxygen supply port.

In the combustion system according to this preferred embodiment of the present invention, part of the exhaust gas diverging from between the dust removal unit and the desulfurization unit is introduced to the combustion oxygen supply port. This makes it possible to decrease the flow rate of nitrogen oxide in the exhaust gas introduced to the denitration unit as well as to decrease the flow rate of the exhaust gas introduced to the desulfurization unit and the cooling unit. Therefore, it becomes possible to downsize the denitration unit and to reduce the capacity of the desulfurization unit and the cooling unit.

Preferably, in the combustion system according to the present invention, part of exhaust gas diverging from between the denitration unit and the dust removal unit is introduced to the combustion oxygen supply port.

In the combustion system according to this preferred embodiment of the present invention, part of the exhaust gas diverging from between the denitration unit and the dust removal unit is introduced to the combustion oxygen supply port. This makes it possible to decrease the flow rate of nitrogen oxide in the exhaust gas introduced to the denitration unit as well as to decrease the flow rate of the exhaust gas introduced to the heat exchange unit, the dust removal unit, the desulfurization unit and the cooling unit. Therefore, it becomes possible to downsize the denitration unit and to reduce the capacity of the heat exchange unit, the dust removal unit, the desulfurization unit and the cooling unit.

Preferably, in the combustion system according to the present invention, the denitration unit includes: an ammonia supply unit for supplying ammonia into exhaust gas; and a catalyst unit for allowing exhaust gas supplied by the ammonia supply unit to pass therethrough.

In the combustion system according to this preferred embodiment of the present invention, the exhaust gas having a decreased flow rate of nitrogen oxide is introduced to the denitration unit. Therefore, the amount of ammonia to be supplied can be reduced as compared with the case where the exhaust gas whose flow rate of nitrogen oxide is not decreased.

### {Advantageous Effects of Invention}

In the present invention, part of exhaust gas diverging from between the combustion furnace and the smoke removal device is resupplied to the inside of the combustion furnace through the burner unit. A zone under reducing atmosphere is formed between the burner unit of the combustion furnace and the combustion oxygen supply port. Consequently, the exhaust gas diverging from between the combustion furnace and the smoke removal device can be reduced in the zone under reducing atmosphere formed in the combustion furnace before being discharged. This makes it possible to decrease the flow rate of the exhaust gas introduced from the combustion furnace to the smoke removal device and to decrease the flow rate of smoke. Therefore, the capacity of the smoke removal device can be reduced.

Moreover, part of exhaust gas diverging from the downstream side of the denitration unit of the smoke removal device is the exhaust gas having the concentration of nitrogen oxide, which is smoke, decreased by the smoke removal device. The exhaust gas having a decreased nitrogen oxide concentration is introduced to the combustion oxygen supply port and is used for promoting complete combustion of the unburned fuel contained in the exhaust gas which has partially been reduced by passing the reducing atmosphere inside the combustion furnace. Therefore, the exhaust gas can be discharged out of the combustion furnace while the concentration of nitrogen oxide contained therein is maintained low. The exhaust gas having a decreased nitrogen oxide concentration is recirculated to the combustion furnace and the smoke removal device, so that increase in the concentration of nitrogen oxide in the outlet of the combustion furnace can be suppressed.

### {Brief Description of Drawings}

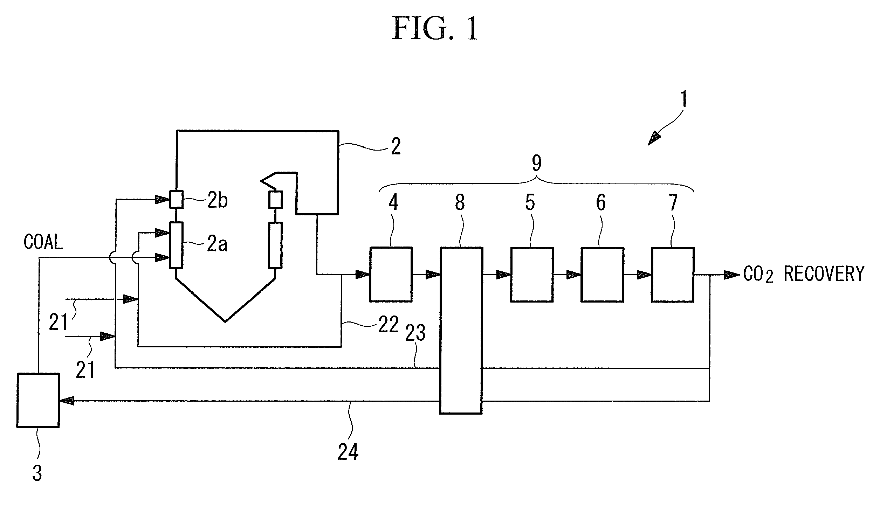

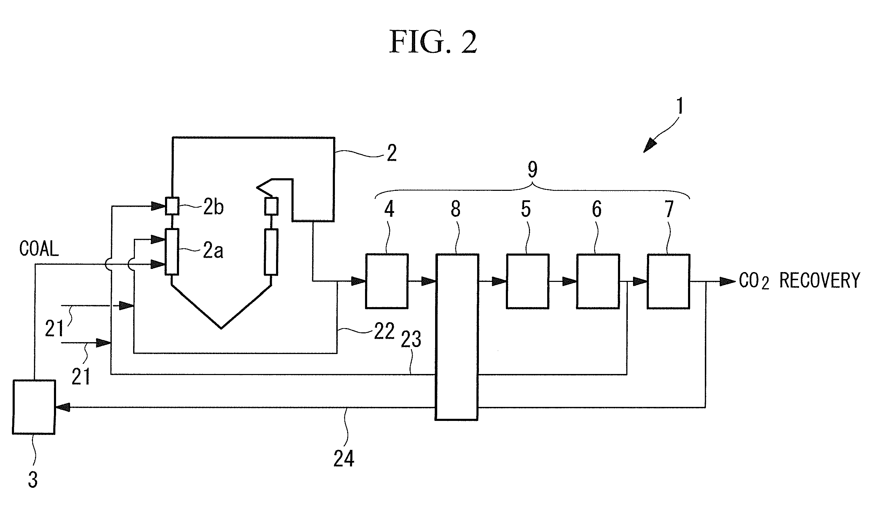

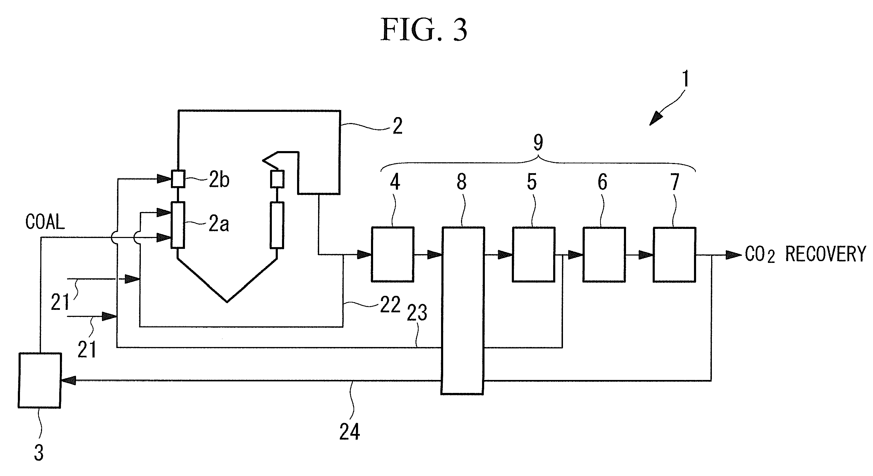

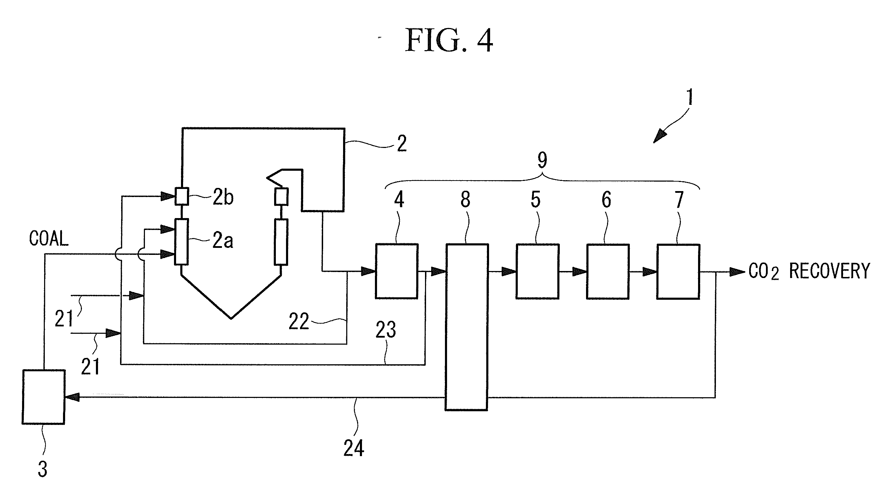

{Fig. 1} Fig. 1 is a schematic structure view of a combustion system according to a first embodiment of the present invention.
{Fig. 2} Fig. 2 is a schematic structure view of a combustion system according to a second embodiment of the present invention.
{Fig. 3} Fig. 3 is a schematic structure view of a combustion system according to a third embodiment of the present invention.
{Fig. 4} Fig. 4 is a schematic structure view of a combustion system according to a fourth embodiment of the present invention.
{Fig. 5} Fig. 5 is a schematic structure view of a conventional oxygen combustion boiler system.

### {Description of Embodiments}

### (First Embodiment)

Fig. 1 is a schematic structure view of a combustion system according to the first embodiment of the present invention.

The combustion system 1 includes a coal fired boiler (combustion furnace) 2, a coal pulverizer 3 for pulverizing coal supplied to the coal fired boiler 2, and a smoke removal device 9.

The coal fired boiler 2 is an oxygen combustion boiler which can conduct denitration inside the furnace (not shown) by two-stage combustion. The coal fired boiler 2 includes a furnace inside for combusting fuel, a burner unit 2a, and an additional air port (hereinafter referred to as "AA unit") 2b. Coal as fuel supplied from the coal pulverizer 3, oxygen (combustion oxygen) introduced from a combustion oxygen supply system 21, and later-described secondary recirculation gas for burner unit 22 are introduced to the burner unit 2a. Remaining part of the oxygen introduced from the combustion oxygen supply system 21 to the burner unit 2a and later-described secondary recirculation gas for AA unit 23 are introduced to the AA unit (combustion oxygen supply port) 2b.

The coal pulverizer 3 is for pulverizing the coal, which is supplied to the coal fired boiler 2, into fine powder of a size of several µm to hundreds of µm. Part of exhaust gas (hereinafter referred to as "primary recirculation gas") 24 discharged from the smoke removal device 9 is introduced to the coal pulverizer 3 as high-temperature carrier gas for drying the pulverized coal and conveying the pulverized coal from the coal pulverizer 3 to the coal fired boiler 2.

The smoke removal device 9 includes a denitration device (denitration unit) 4, a gas heater (heat exchange unit) 8, a dust removal device (dust removal unit) 5, a desulfurization device (desulfurization unit) 6, and a gas cooler (cooling unit) 7.

The denitration device 4 includes an ammonia supply unit (not shown) for spraying ammonia to the exhaust gas, and a catalyst unit (not shown) for allowing the exhaust gas having ammonia sprayed thereto to pass therethrough. The denitration device 4 is for removing nitrogen oxide in the exhaust gas by spraying ammonia to the introduced exhaust gas and for having the exhaust gas pass the catalyst unit.

The gas heater 8 is for conducting heat exchange of the high-temperature exhaust gas, which has come from the coal fired boiler 2 and passed the denitration device 4, with the primary recirculation gas 24 and the secondary recirculation gas for AA unit 23. As a consequence of the heat exchange, the primary recirculation gas 24 reaches a temperature suitable for drying the coal pulverized by the coal pulverizer 3, while the secondary recirculation gas for AA unit 23 reaches a temperature suitable for being introduced to the inside of the furnace through the AA unit 2b of the coal fired boiler 2.

The dust removal device 5 is for removing dust in the exhaust gas, and the desulfurization device 6 is for removing sulfur oxide in the introduced exhaust gas.

The gas cooler 7 is for cooling the introduced exhaust gas.

Description is now given of the flow of exhaust gas in the present embodiment.

Oxygen introduced from the combustion oxygen supply system 21, part of exhaust gas (hereinafter referred to as "secondary recirculation gas for burner") 22 introduced from between the coal fired boiler 2 and the denitration device 4, and coal introduced from the coal pulverizer 3 are supplied to the burner unit 2a of the coal fired boiler 2. The secondary recirculation gas for burner 22 is used as diluents for diluting the oxygen introduced from the combustion oxygen supply system 21.

Oxygen introduced from the combustion oxygen supply system 21 and part of exhaust gas (hereinafter referred to as "secondary recirculation gas for AA unit") 23 purified by passing the smoke removal device 9 are supplied to the AA unit 2b of the coal fired boiler 2. The secondary recirculation gas for AA unit 23 is used as dilution gas for diluting the oxygen introduced from the combustion oxygen supply system 21.

The amount of oxygen supplied from the combustion oxygen supply system 21 to the coal fired boiler 2 through the burner unit 2a and the AA unit 2b is set to be 1.15 times the theoretical combustion oxygen amount of the coal supplied to the inside of the furnace through the burner unit 2a. The amount of oxygen supplied to the inside of the furnace of the coal fired boiler 2 is not larger than 1.0 times the theoretical combustion oxygen amount of the coal supplied to the inside of the furnace through the burner unit 2a.

A remaining amount of the oxygen, which is introduced from the combustion oxygen supply system 21 to the burner unit 2a, is used as the oxygen supplied to the inside of the furnace through the AA unit 2b. The amount of oxygen supplied through the AA unit 2b is up to about 40% of the amount of oxygen introduced from the combustion oxygen supply system 21 to the coal fired boiler 2.

The amount of oxygen charged to the inside of the furnace through the burner unit 2a is made not larger than 1.0 times the theoretical combustion oxygen amount of coal, and oxygen is also charged to the inside of the furnace through the AA unit 2b. As a consequence, a zone between the burner unit 2a and the AA unit 2b becomes short of oxygen. Due to the shortage of oxygen in the zone between the burner unit 2a and the AA unit 2b, the zone between the burner unit 2a and the AA unit 2b inside the furnace is put in the state of reducing atmosphere.

Nitrogen oxide in the exhaust gas generated by combustion of coal and oxygen charged to the inside of the furnace through the burner unit 2a is reduced when passing the zone under reducing atmosphere through the burner unit 2a. Consequently, nitrogen oxide in the exhaust gas generated within the coal fired boiler 2 is removed inside the furnace of the coal fired boiler 2.

The concentration of nitrogen oxide contained in the exhaust gas discharged from the coal fired boiler 2 is decreased by in-furnace NOx removal in the coal fired boiler 2. The exhaust gas with a decreased nitrogen oxide concentration is introduced to the smoke removal device 9. As the concentration of nitrogen oxide decreases, the amount of exhaust gas introduced from the coal fired boiler 2 to the smoke removal device 9 is decreased.

The exhaust gas introduced to the smoke removal device 9 is introduced to the denitration device 4 which constitutes the smoke removal device 9, where residual nitrogen oxide is removed. The exhaust gas with nitrogen oxide removed is introduced to the air heater 8. The temperature of the exhaust gas introduced to the air heater 8 is high. In the air heater 8, the high-temperature exhaust gas is subjected to heat exchange with the secondary recirculation gas for AA unit 23 and the primary recirculation gas 24. After heat exchange in the air heater 8, the high-temperature exhaust gas introduced from the denitration device 4 is cooled and then introduced to the dust removal device 5.

The exhaust gas introduced to the dust removal device 5 is subjected to removal of dust and the like before being discharged. The exhaust gas discharged from the dust removal device 5 is introduced to the desulfurization device 6, where sulfuric compounds are removed. The exhaust gas purified through the denitration device 4, the dust removal device 5, and the desulfurization device 6 is mostly composed of carbon dioxide and steam. This purified exhaust gas is introduced to the gas cooler 7, where the temperature thereof is lowered. The exhaust gas whose temperature is lowered by the gas cooler 7 is discharged from the smoke removal device 9.

Part of the exhaust gas discharged from the smoke removal device 9 is introduced to the air heater 8 as secondary recirculation gas for AA unit 23, where heat exchange is conducted between the secondary recirculation gas for AA unit 23 and the high-temperature exhaust gas discharged from the denitration device 4, so that the temperature of the secondary recirculation gas for AA unit 23 increases. The thus-obtained high-temperature secondary recirculation gas for AA unit 23 is then introduced to the AA unit 2b of the coal fired boiler 2. Part of the exhaust gas discharged from the smoke removal device 9 is further introduced to the air heater 8 as primary recirculation gas 24. The primary recirculation gas 24 introduced to the air heater 8 is heated by exchanging heat with the high-temperature exhaust gas discharged from the denitration device 4. The thus-obtained high-temperature primary recirculation gas 24 is then introduced to the coal pulverizer 3. The high-temperature primary recirculation gas 24 introduced to the coal pulverizer 3 is used as carrier gas for drying coal and for conveying pulverized coal to the coal fired boiler 2.

The exhaust gas purified by the smoke removal device 9 is mostly introduced to a system such as a carbon dioxide recovery system (not shown) where carbon dioxide in the exhaust gas is recovered. Thus, the exhaust gas with carbon dioxide, nitrogen oxide, and sulfur oxide removed therefrom is emitted to the outside of the combustion system 1.

The combustion system according to the present embodiment has following operation effects.

In the combustion system according to the present embodiment, the secondary recirculation gas for burner (part of exhaust gas) 22 diverging from between the coal fired boiler (combustion furnace) 2 and the smoke removal device 9 is resupplied to the inside of the furnace (not shown) of the coal fired boiler 2 through the burner unit 2a. Consequently, the exhaust gas containing high-concentration nitrogen oxide introduced to the smoke removal device 9 is decreased. Therefore, it becomes possible to reduce the load of the denitration device 4.

Moreover, the reducing atmosphere is formed between the burner unit 2a and the AA unit (combustion oxygen supply port) 2b of the coal fired boiler 2. Consequently, the secondary recirculation gas for burner unit 22 diverging from between the coal fired boiler 2 and the smoke removal device 9 can be reduced in the zone under reducing atmosphere formed in the coal fired boiler 2 and then be discharged. This makes it possible to decrease the flow rate of the exhaust gas introduced from the coal fired boiler 2 to the smoke removal device 9 and to decrease the flow rate of nitrogen oxide in smoke. Therefore, the capacity of the smoke removal device 9 can be reduced.

The secondary recirculation gas for AA unit 23 which is part of the exhaust gas discharged from the downstream side of the smoke removal device 9 is the exhaust gas having the concentration of nitrogen oxide decreased by the denitration device 4. This exhaust gas is introduced to the coal fired boiler 2 through the AA unit 2b and is used for promoting complete combustion of unburned pulverized coal contained in the exhaust gas which is partially reduced by passing the reducing atmosphere inside the furnace of the coal fired boiler 2. Therefore, the exhaust gas is discharged out of the furnace of the coal fired boiler 2 while the concentration of nitrogen oxide contained therein is maintained low. As a result, the exhaust gas having a decreased nitrogen oxide concentration is recirculated between the coal fired boiler 2 and the smoke removal device 9, so that increase in the concentration of nitrogen oxide in the outlet of the furnace of the coal fired boiler 2 can be suppressed.

The exhaust gas with a decreased flow rate of nitrogen oxide is introduced to the denitration device (denitration unit) 4, so that the amount of ammonia sprayed from the ammonia supply unit (not shown) to the exhaust gas can be decreased as compared with the case where the exhaust gas whose flow rate of nitrogen oxide is not decreased is introduced to the denitration device 4. Therefore, it becomes possible to downsize the denitration device 4.

### (Second Embodiment)

Hereinafter, the second embodiment of the present invention will be described. A combustion system of the present embodiment is different from the first embodiment in the point that the secondary recirculation gas for AA unit is introduced from between the desulfurization device and the gas cooler. Other structural members are similar to those of the first embodiment. Therefore, like structural members and flows are designated by like reference signs to omit description.

Fig. 2 is a schematic structure view of a combustion system according to the second embodiment of the present invention.

Oxygen (combustion oxygen) introduced from a combustion oxygen supply system 21 and part of exhaust gas diverging from between a desulfurization device (desulfurization unit) 6 and a gas cooler (cooling unit) 7 which constitute a smoke removal device 9 are supplied to an AA unit (combustion oxygen supply port) 2b of a coal fired boiler (combustion furnace) 2 as secondary recirculation gas for AA unit 23.

The combustion system according to the present embodiment has following operation effects.

In the combustion system according to the present embodiment, the secondary recirculation gas for AA unit (part of exhaust gas) 23 diverging from between the desulfurization device (desulfurization unit) 6 and the gas cooler (cooling unit) 7 is introduced to the AA unit (combustion oxygen supply port) 2b of the coal fired boiler (combustion furnace) 2. Accordingly, the flow rate of the exhaust gas introduced to the gas cooler 7 can be decreased. This makes it possible to reduce the capacity of the gas cooler 7 and to decrease the flow rate of nitrogen oxide in the exhaust gas introduced to the denitration device (denitration unit) 4 for the same reason as that in the first embodiment. As a result, the denitration device 4 can be downsized.

### (Third Embodiment)

Hereinafter, the third embodiment of the present invention will be described. A combustion system of the present embodiment is different from the first embodiment in the point that the secondary recirculation gas for AA unit is introduced from between the dust removal device and the desulfurization device. Other structural members are similar to those of the first embodiment. Therefore, like structural members and flows are designated by like reference signs to omit description.

Fig. 3 is a schematic structure view of a combustion system according to the third embodiment of the present invention.

Oxygen (combustion oxygen) introduced from a combustion oxygen supply system 21 and part of exhaust gas diverging from between a dust removal device (dust removal unit) 5 and a desulfurization device (desulfurization unit) 6 which constitute a smoke removal device 9 are supplied to an AA unit (combustion oxygen supply port) 2b of a coal fired boiler (combustion furnace) 2 as secondary recirculation gas for AA unit 23.

The combustion system according to the present embodiment has following operation effects.

In the combustion system according to the present embodiment, the secondary recirculation gas for AA unit (part of exhaust gas) 23 diverging from between the dust removal device (dust removal unit) 5 and the desulfurization device (desulfurization unit) 6 is introduced to the AA unit (combustion oxygen supply port) 2b. Accordingly, the flow rate of the exhaust gas introduced to the desulfurization device 6 and a gas cooler 7 can be decreased. This makes it possible to reduce the capacity of the desulfurization device 6 and the gas cooler 7 and to decrease the flow rate of nitrogen oxide in the exhaust gas introduced to the denitration device (denitration unit) 4 for the same reason as that in the first embodiment. As a result, the denitration device 4 can be downsized.

### (Fourth Embodiment)

Hereinafter, the fourth embodiment of the present invention will be described. A combustion system of the present embodiment is different from the first embodiment in the point that the secondary recirculation gas for AA unit is introduced from between the denitration device and the air heater. Other structural members are similar to those of the first embodiment. Therefore, like structural members and flows are designated by like reference signs to omit description.

Fig. 4 is a schematic structure view of a combustion system according to the fourth embodiment of the present invention.

Oxygen (combustion oxygen) introduced from a combustion oxygen supply system 21 and part of exhaust gas diverging from between a denitration device (denitration unit) 4 and an air heater (heat exchange unit) 8 which constitute a smoke removal device 9 are supplied to an AA unit (combustion oxygen supply port) 2b of a coal fired boiler (combustion furnace) 2 as secondary recirculation gas for AA unit 23.

The combustion system according to the present embodiment has following operation effects.

In the combustion system according to the present embodiment, the secondary recirculation gas for AA unit (part of exhaust gas) 23 diverging from between the denitration device (denitration unit) 4 and the air heater (heat exchange unit) 8 is introduced to the AA unit (combustion oxygen supply port) 2b. Accordingly, the flow rate of the exhaust gas introduced to the air heater 8, the dust removal device (dust removal unit) 5, the desulfurization device (desulfurization unit) 6, and the gas cooler (cooling unit) 7 can be decreased. This makes it possible to reduce the capacity of the air heater 8, the dust removal device 5, the desulfurization device 6 and the gas cooler 7 and to decrease the flow rate of nitrogen oxide in the exhaust gas introduced to the denitration device (denitration unit) 4 for the same reason as that in the first embodiment. As a result, the denitration device 4 can be downsized.

### {Reference Signs List}

1 Combustion system
2 Coal fired boiler (combustion furnace)
2a Burner unit
2b AA unit (combustion oxygen supply port)
3 Coal pulverizer
4 Denitration device (denitration unit)
5 Dust removal device (dust removal unit)
6 Desulfurization device (desulfurization unit)
7 Gas cooler (cooling unit)
8 Air heater (heat exchange unit)
9 Smoke removal device
21 Combustion oxygen supply system (combustion oxygen)
22 Secondary recirculation gas for burner unit (part of exhaust gas)
23 Secondary recirculation gas for AA unit (part of exhaust gas)
24 Primary recirculation gas (part of exhaust gas)

## Claims

1. A combustion system (1), comprising:
a combustion furnace (2) having:
a burner unit (2a) for supplying fuel and combustion oxygen to an inside of the furnace (2);
a reduction zone formed on a downstream side of the burner unit (2a) for combusting the fuel; and
a combustion oxygen supply port (2b) for supplying combustion oxygen so that unburned fuel which has passed the reduction zone completely combusts; and
a smoke removal device (9) for removing smoke in the exhaust gas discharged from the combustion furnace (2), the smoke removal device (9) including a denitration unit (4) for removing nitrogen oxide from the exhaust gas,
wherein part of exhaust gas ( 23) diverging from a downstream side of the denitration unit (4) of the smoke removal device (9) is introduced to the combustion oxygen supply port (2b), **characterized in that** part of exhaust gas (22) diverging from between the combustion furnace (2) and the denitration unit (4) of the smoke removal device (9) is introduced to the burner unit (2a).

2. The combustion system (1) according to claim 1, wherein the smoke removal device (9) includes:
a desulfurization unit (6) for removing sulfur oxide in exhaust gas which has passed the denitration unit (4); and
a cooling unit (7) for cooling exhaust gas which has passed the desulfurization unit (6), and
wherein part of exhaust gas (23) diverging from between the desulfurization unit (6) and the cooling unit (7) is introduced to the combustion oxygen supply port (2b).

3. The combustion system (1) according to claim 1, wherein the smoke removal device (9) includes:
a dust removal unit (5) for removing dust in exhaust gas which has passed the denitration unit (4); and
a desulfurization unit (6) for removing sulfur oxide in exhaust gas which has passed the dust removal unit (5); and
wherein part of exhaust gas (23) diverging from between the dust removal unit (5) and the desulfurization unit (6) is introduced to the combustion oxygen supply port (2b).

4. The combustion system (1) according to claim 1, wherein the smoke removal device (9) includes:
a dust removal unit (5) for removing dust in exhaust gas which has passed the denitration unit (4); and
wherein part of exhaust gas (23) diverging from between the denitration unit (4) and the dust removal unit (5) is introduced to the combustion oxygen supply port (2b).

5. The combustion system (1) according to any one of claims 1 to 4, wherein the denitration unit (4) includes:
an ammonia supply unit for supplying ammonia into exhaust gas; and
a catalyst unit for allowing exhaust gas supplied by the ammonia supply unit to pass therethrough.

## Patentansprüche

1. Ein Verbrennungssystem (1), mit:
einem Verbrennungsofen (2) mit:
einer Brennereinheit (2a) zum Zuführen von Brennstoff und von Verbrennungssauerstoff zu einer Innenseite des Ofens (2),
einer Reduktionszone, die an einer stromabwärtigen Seite der Brennereinheit (2a) zum Verbrennen des Brennstoffs ausgebildet ist, und
einem Verbrennungssauerstoff-Zuführanschluss (2b) zum Zuführen von Verbrennungssauerstoff, derart, dass unverbrannter Brennstoff, der die Reduktionszone passiert hat, vollständig verbrennt, und
einer Rauchentfernungsvorrichtung (9) zum Entfernen von Rauch in dem Abgas, das aus dem Verbrennungsofen (2) ausgetragen wird, wobei die Rauchentfernungsvorrichtung (9) eine Denitrierungseinheit (4) zum Entfernen von Stickoxid aus dem Abgas aufweist,
wobei ein Teil von Abgas (23), der von einer stromabwärtigen Seite der Denitrierungseinheit (4) der Rauchentfernungsvorrichtung (9) abgezweigt wird, in den Verbrennungssauerstoff-Zuführanschluss (2b) eingebracht wird,
**dadurch gekennzeichnet, dass** ein Teil von Abgas (22), der von zwischen dem Verbrennungsofen (2) und der Denitrierungseinheit (4) der Rauchentfernungsvorrichtung (9) abgezweigt wird, in die Brennereinheit (2a) eingebracht wird.

2. Das Verbrennungssystem (1) gemäß Anspruch 1, wobei die Rauchentfernungsvorrichtung (9) aufweist:
eine Entschwefelungseinheit (6) zum Entfernen von Schwefeloxid in Abgas, das die Denitrierungseinheit (4) passiert hat, und
eine Kühleinheit (7) zum Kühlen von Abgas, das die Entschwefelungseinheit (6) passiert hat, und
wobei ein Teil von Abgas (23), der von zwischen der Entschwefelungseinheit (6) und der Kühleinheit (7) abgezweigt wird, in den Verbrennungssauerstoff-Zuführanschluss (2b) eingebracht wird.

3. Das Verbrennungssystem (1) gemäß Anspruch 1, wobei die Rauchentfernungsvorrichtung (9) aufweist:
eine Staubentfernungseinheit (5) zum Entfernen von Staub in Abgas, das die Denitrierungseinheit (4) passiert hat, und
eine Entschwefelungseinheit (6) zum Entfernen von Schwefeloxid in Abgas, das die Staubentfernungseinheit (5) passiert hat, und
wobei ein Teil von Abgas (23), der von zwischen der Staubentfernungseinheit (5) und der Entschwefelungseinheit abgezweigt wird, in den Verbrennungssauerstoff-Zuführanschluss (2b) eingebracht wird.

4. Das Verbrennungssystem (1) gemäß Anspruch 1, wobei die Rauchentfernungsvorrichtung (9) aufweist:
eine Staubentfernungseinheit (5) zum Entfernen von Staub in Abgas, das die Denitrierungseinheit (4) passiert hat, und
wobei ein Teil von Abgas (23), der von zwischen der Denitrierungseinheit (4) und der Staubentfernungseinheit (5) abgezweigt wird, in den Verbrennungssauerstoff-Zuführanschluss (2b) eingebracht wird.

5. Das Verbrennungssystem (1) gemäß einem der Ansprüche 1 bis 4, wobei die Denitrierungseinheit (4) aufweist:
eine Ammoniak-Zuführeinheit zum Zuführen von Ammoniak in Abgas, und
eine Katalysatoreinheit, die es von der Ammoniak-Zuführeinheit zugeführtem Abgas erlaubt, durch diese hindurchzutreten.

## Revendications

1. Système (1) de combustion comprenant:
un four (2) de combustion ayant:
une unité (2a) de brûleur pour envoyer du combustible et de l'oxygène de combustion à l'intérieur du four (2);
une zone de réduction formée en aval de l'unité (2a) de brûleur pour brûler le combustible; et
un orifice (2b) d'alimentation en oxygène de combustion pour fournir de l'oxygène de combustion de manière à ce que du combustible non brûlé qui a passé dans la zone de réduction brûle complètement; et
un dispositif (9) d'élimination de la fumée pour éliminer de la fumée dans les gaz d'échappement évacués du four (2) de combustion, le dispositif (9) d'élimination de la fumée comprenant une unité (4) de dénitratation pour éliminer de l'oxyde d'azote des gaz d'échappement,
dans lequel une partie des gaz (23) d'échappement, divergeant d'un côté en aval de l'unité (4) de dénitratation du dispositif (9) d'élimination de la fumée, est introduite dans l'orifice (2b) d'alimentation en oxygène de combustion,
**caractérisé en ce qu'**une partie des gaz (22) d'échappement divergeant d'entre le four (2) de combustion et l'unité (4) de dénitratation du dispositif (9) d'élimination de la fumée est introduite dans l'unité (2a) de brûleur.

2. Système (1) de combustion suivant la revendication 1, dans lequel le dispositif (9) d'élimination de la fumée comprend:
une unité (6) de désulfuration pour éliminer de l'oxyde de soufre dans les gaz d'échappement qui ont passé dans l'unité (4) de dénitratation; et
une unité (7) de refroidissement pour refroidir les gaz d'échappement qui ont passé dans l'unité (6) de désulfuration, et
dans lequel une partie des gaz (23) d'échappement, divergeant d'entre l'unité (6) de désulfuration et l'unité (7) de refroidissement, est introduite dans l'orifice (2b) d'alimentation en oxygène de combustion.

3. Système (1) de combustion suivant la revendication 1, dans lequel le dispositif (9) d'élimination de la fumée comprend:
une unité (5) d'élimination de la poussière pour éliminer de la poussière dans des gaz d'échappement qui ont passé dans l'unité (4) de dénitratation; et
une unité (6) de désulfuration pour éliminer de l'oxyde de soufre dans des gaz d'échappement qui ont passé dans l'unité (5) d'élimination de la poussière; et
dans lequel une partie des gaz (23) d'échappement, divergeant d'entre l'unité (5) d'élimination de la poussière et l'unité (6) de désulfuration, est introduite dans l'orifice (2b) d'alimentation en oxygène de combustion.

4. Système (1) de combustion suivant la revendication 1, dans lequel, le dispositif (9) d'élimination de la fumée comprend:
une unité (5) d'élimination de la poussière pour éliminer de la poussières dans les gaz d'échappement qui ont passé dans l'unité (4) de dénitratation; et
dans lequel une partie des gaz (23) d'échappement, divergeant d'entre l'unité (4) de dénitratation et l'unité (5) d'élimination de la poussière, est introduite dans l'orifice (2b) d'alimentation en oxygène de combustion.

5. Système (1) de combustion suivant l'une quelconque des revendications 1 à 4, dans lequel l'unité (4) de dénitratation comprend:
une unité d'alimentation en ammoniac pour envoyer de l'ammoniac dans les gaz d'échappement; et
une unité de catalyseur pour permettre aux gaz d'échappement alimentés par l'unité d'alimentation en ammoniac d'y passer.
